# EUROPÄISCHE PATENTSCHRIFT

(11) **EP 3 257 656 B1**
(45) Veröffentlichungstag und Bekanntmachung des Hinweises auf die Patenterteilung: **05.12.2018**
(21) Anmeldenummer: 16174724.1
(22) Anmeldetag: 16.06.2016
(51) Int. Cl.: B29C 65/00, B29C 65/20, B29C 65/78

(54) **ROHRENDENERKENNUNG**
PIPE END DETECTION
RECONNAISSANCE D'EXTREMITE DE TUYAU

(43) Veröffentlichungstag der Anmeldung: 20.12.2017
(73) Patentinhaber: Georg Fischer Rohrleitungssysteme AG, 8201 Schaffhausen (CH)
(72) Erfinder: Hasific, Edin, 8207 Schaffhausen (CH)
(74) Vertreter: Fenner, Seraina

(56) Entgegenhaltungen:
- EP-A1- 2 963 380
- EP-A2- 0 402 910
- EP-A2- 0 535 454
- EP-A2- 2 360 009

## Beschreibung

Die Erfindung betrifft ein Verfahren und eine damit verbundene Vorrichtung zur Erkennung von in eine Stumpfschweissmaschine eingespannte Kunststoffrohrenden, wobei die Kunststoffrohrenden mittels eines Hobels, der zwischen die Kunststoffrohrenden bringbar ist gehobelt und anschliessend mittels eines Heizspiegels, der zwischen die Kunststoffrohrenden bringbar ist aufgeheizt werden und die Kunststoffrohrenden nach dem Entfernen des Heizspiegels miteinander verschweisst werden, wobei der Hobel und/oder der Heizspiegel mittels einer gesteuerten Bewegung zwischen die Kunststoffrohrenden eingeschwenkt werden.

Stumpfschweissmaschinen dienen der Verbindung von zwei Kunststoffrohrleitungsenden, wobei die aus dem Stand der Technik bekannten Stumpfschweissmaschinen meist manuell betätigbar sind insbesondere der Hobel- und Erwärmungsvorgang der Rohrenden.

Bisher war es möglich, dass die vom Stumpfschweissmaschinenbediener eingegebenen Rohrparameter, welche zur Verschweissung manuell in die Maschine einzugeben sind, nicht mit den in die Stumpfschweissmaschine eingespannten Rohrenden übereinstimmen. Bspw. konnten falsche Rohrdimensionen in die Steuerung eingegeben werden, welche dann nicht die benötigten Schweissparameter wie Zeit, Temperatur, Druck usw. die den Rohrleitungen entsprechen, ergaben. Dadurch war es möglich die Verschweissung mit falschen Parametern durchzuführen was dann eine unbrauchbare Verschweissung zur Folge hatte.

Die EP 0 535 454 A1 offenbart eine Einrichtung zum Verschweissen von Kunststoffteilen, wobei das Bearbeitungswerkzeug wie auch die Heizvorrichtung von Hand zwischen die Rohrenden geschwenkt wird. Um den entsprechenden Schweissablauf durchzuführen werden vom Bediener die Kunststoffrohrdaten bspw. Dimension, Werkstoff usw. manuell in die Einrichtung eingegeben, aufgrund derer die gespeicherten Schweissparameter vom System ausgewählt werden und die Einrichtung diese entsprechend anwendet, wie bspw. die Heizvorrichtung auf die entsprechende Temperatur vorheizt usw.

Wie bereits erwähnt besteht hier der Nachteil, dass vom Bediener falsche Werte, die nicht den eingespannten Rohrenden entsprechen, eingegeben werden können und die Einrichtung dennoch eine Verschweissung aufgrund falscher Werte durchführt, was die Verschweissung in der Regel unbrauchbar macht.

Die EP 2 963 380 A1 offenbart ein Verfahren zur Überprüfung einer Stumpfschweissnaht bei Kunststoffrohren mittels eines auf die Naht gerichteten Sensors. Bei dieser Vorrichtung wird die Naht selbst nach dem Schweissvorgang überprüft und der Sensor ist an einer dafür vorgesehen Vorrichtung befestigt.

Die EP 0 402 910 A2 offenbart eine Vorrichtung zum Verschweissen von Kunststoffteilen mit einschwenkbarem, elektrisch beheizbarem Heizspiegel. Jedoch offenbart die Vorrichtung keinerlei Automation.

Die EP 2 360 009 A2 offenbart eine Siegelvorrichtung mit einem Sensorelement in einer Öffnung der Heizplatte, wobei das Sensorelement der Erkennung der Siegelplatte dient.

Es ist Aufgabe der Erfindung ein Verfahren und eine damit verbundene Vorrichtung vorzuschlagen, welches gewährleistet, dass die Verschweissung der Kunststoffrohrenden korrekt bzw. mit den zu den eingespannten Kunststoffrohrenden entsprechenden Schweissparametern durchgeführt wird und keine Verschweissung mit falschen Werten durchgeführt werden kann.

Diese Aufgabe wird erfindungsgemäss dadurch gelöst, dass mittels mindestens eines am Hobel und/oder am Heizspiegel angeordneten Sensors eine Erkennung bzw. Erfassung der Kunststoffrohrenden während der gesteuerten Einschwenkbewegung des Hobels und/oder Heizspiegels erfolgt.

Der Hobel und/oder Heizspiegel wird zwischen die Kunststoffrohrenden geschwenkt, wobei der Schwenkvorgang gesteuert erfolgt. Das heisst, der Hobel und/oder Heizspiegel wird automatisch eingeschwenkt um einen definierten Bewegungsablauf des Hobels und/oder Heizspiegels zu erhalten. Die Einschwenkgeschwindigkeit des Hobels und/oder Heizspiegels ist vorzugsweise konstant. Der am Hobel und/oder Heizspiegel angeordnete Sensor schwenkt dadurch entlang einer vorgegebenen Kurve bzw. Radius an den Rohrenden vorbei und erfasst dadurch die Rohrenden über einen bestimmten Zeitraum während des Schwenkvorgangs was die Ermittlung der Rohrdimension mit Hilfe der Steuerung ermöglicht.
Der Hobel und/oder Heizspiegel schwenkt mit einer vordefinierten Geschwindigkeit ein bzw. zwischen die Rohrenden, was dem Sensor bzw. der Steuerung ermöglicht die Dimension der Rohrenden aufgrund des Zeitraums währenddessen der Sensor das Rohrende erkennt, zu ermitteln.
Alternativ kann der Hobel und/oder Heizspiegel auch mit einer variablen Einschwenkgeschwindigkeit zwischen die Spannstellen bzw. die eingespannten Rohrenden einschwenken, wobei die variable Einschwenkgeschwindigkeit mithilfe der Steuerung geregelt wird und dadurch auch die Dimension der eingespannten Rohrenden ermittelt werden kann.

In erster Linie soll der ermittelte Rohrdimensionswert als Kontrolle dienen, das heisst, der Bediener gibt immer noch die Werte des Rohres manuell ein aber die Steuerung vergleicht diese mit den durch den Sensor ermittelten Werten. Bei keiner Übereinstimmung fordert die Steuerung den Bediener auf die Werte zu überprüfen um eine Fehlschweissung zu vermeiden.
Selbstverständlich besteht auch die Möglichkeit die Vorrichtung bzw. das Verfahren mit Hilfe der Steuerung so auszugestalten, dass der komplette Ablauf automatisch durchgeführt wird und die durch den Sensor ermittelten Daten nicht nur als Kontrolle dienen sondern als definitive Werte aufgrund derer die Verschweissung durchzuführen ist. Dann müsste der Bediener keine Werte mehr eingeben sondern der Vorgang würde komplett automatisch ablaufen.

Als vorteilhaft hat sich gezeigt, dass beide sich gegenüberliegenden Kunststoffrohrenden jeweils mittels eines separaten Sensors erkannt bzw. erfasst werden. Dies bedingt, dass die Sensoren beidseitig des Hobels und/oder Heizspiegels angeordnet sind. Dadurch kann auch ermittelt werden, wenn fälschlicherweise zwei unterschiedliche Kunststoffrohre in die Schweissvorrichtung eingespannt wurden.

Als bevorzugten Sensor zur Erkennung der Rohrenden wird ein optischer Sensor eingesetzt. Dieser hat den Vorteil, dass er nicht allzu nahe am Kunststoffrohrende vorbeischwenken muss um die Werte zu ermitteln.

Als weitere bevorzugte Ausführungsform wird ein Laser als Sensor eingesetzt auch dieser ermöglicht ein einwandfreies Erfassen der Rohrenden.

Als weitere Ausgestaltung der vorliegenden Erfindung kann auch ein kapazitiver Sensor eingesetzt werden um die Rohrenden zu erfassen. Die Wahl des einzusetzenden Sensors ist nach dem Einsatzgebiet zu tätigen bzw. nach den Umgebungsbedingungen.

Um einen automatischen und für die unterschiedlichen Rohrdimensionen geeigneten Prozess zu ermöglichen ist es von Vorteil, dass die Erkennung bzw. Erfassung der Kunststoffrohrenden berührungslos erfolgt. Der eingesetzte Sensor dient vorzugsweise der Erkennung bzw. Erfassung der Rohrdimension.
Als bevorzugte Ausführungsform hat sich gezeigt, dass der Sensor auch der Rohrwerkstofferkennung dient.
Die Werkstofferkennung der Rohre wird dadurch ermöglicht, dass die erfassten Rohrdimensionen, das heisst, der Innen- und Aussendurchmesser entsprechend jedem Werkstoff speziell zugeordnet sind. Somit werden der Steuerung die Standardwerte der Rohrdimensionen mit den dazugehörigen Werkstoffen hinterlegt, wodurch die Steuerung aufgrund der durch den Sensor erfassten Werte der Rohrdimension ermitteln kann aus welchem Werkstoff die Rohrenden hergestellt sind.

Eine weitere Ausgestaltung der Erfindung besteht darin einen Farbesensor einzusetzen mittels dem der Werkstoff erkannt wird. Die Erkennung des Werkstoffs bzw. des Kunststoffs erfolgt nicht rein über den Farbsensor sondern ist auch über, wie bereits oben erwähnt, die Erkennung der Rohrdimensionen bzw. dem Innen-und Aussendurchmesser, die für jeden Werkstoff eine eigene entsprechende Zuordnung haben, ermittelbar, wobei der Farbsensor hier noch unterstützend zur Absicherung der richtigen Werkstoffzuordnung dienen kann.

Alternativ kann auch ein Härtetest analog Brinell- oder Rockwellhärteprüfung durchgeführt werden um den Werkstoff zu bestimmen und die benötigten Schweissparameter zu generieren.

Eine vorstellbare Ausführungsform um diese Prüfung durchzuführen besteht bspw. darin einen Prüfdorn unterhalb des Kunststoffohres vorzusehen, der anhand der ermittelten Eindringtiefe in das Rohrende bzw. durch die Messung der Längenveränderung des Prüfdorns, den Werkstoff ermitteln lässt.

Die erfindungsgemässe Vorrichtung zum Stumpfschweissen zur Durchführung des erfindungsgemässen Verfahrens von Kunststoffrohrenden, enthält zwei in koaxialer Lage angeordnete Spannstellen, wobei die Spannstellen die Kunststoffrohrenden halten bzw. fixieren, einen Hobel, wobei der Hobel zwischen die Kunststoffrohrenden bringbar ist um die Kunststoffrohrenden zu hobeln und einen Heizspiegel zum anschliessenden Aufheizen der Kunststoffrohrenden, wobei der Heizspiegel zwischen die Kunststoffrohrenden bringbar ist und die Kunststoffrohrenden nach dem Entfernen des Heizspiegels durch das Zusammenfahren der Spannstellen miteinander verschweisst werden, wobei der Hobel und/oder der Heizspiegel mittels einer gesteuerten Bewegung zwischen die Kunststoffrohrenden eingeschwenkt werden, wobei am Hobel und/oder am Heizspiegel mindestens ein Sensor zur Erkennung bzw. Erfassung der Kunststoffrohrenden während der gesteuerten Einschwenkbewegung des Hobels und/oder Heizspiegels angeordnet ist.

Es hat sich als vorteilhaft gezeigt, wenn alle Bewegungsabläufe und somit der gesamte Stumpfschweissvorgang gesteuert ablaufen, das heisst dass neben dem Ein- und Ausschwenkvorgang des Hobels und des Heizspiegels auch das zusammenfahren der Spannstellen für das Hobeln, Aufheizen und Verschweissen gesteuert ablaufen und kein Handbetrieb mehr möglich ist. Vorzugsweise stoppt die Vorrichtung zwischen den einzelnen Schritten und fordert den Bediener auf den Schritt zu überprüfen und wenn nötig eine Reinigung vorzusehen. Um im Ablauf weiterzufahren kann der Bediener den Schritt bestätigen und der Ablauf wird fortgesetzt. Mittels der Steuerung der Vorrichtung ist dadurch der komplette Ablauf der Stumpfschweissung automatisiert.

Die oben aufgeführten Ausgestaltungen sind sowie auf das Verfahren wie auch auf die Vorrichtung anwendbar.

Ein Ausführungsbeispiel der Erfindung wird anhand der Figur beschrieben, wobei sich die Erfindung nicht nur auf das Ausführungsbeispiel beschränkt. Es zeigt:

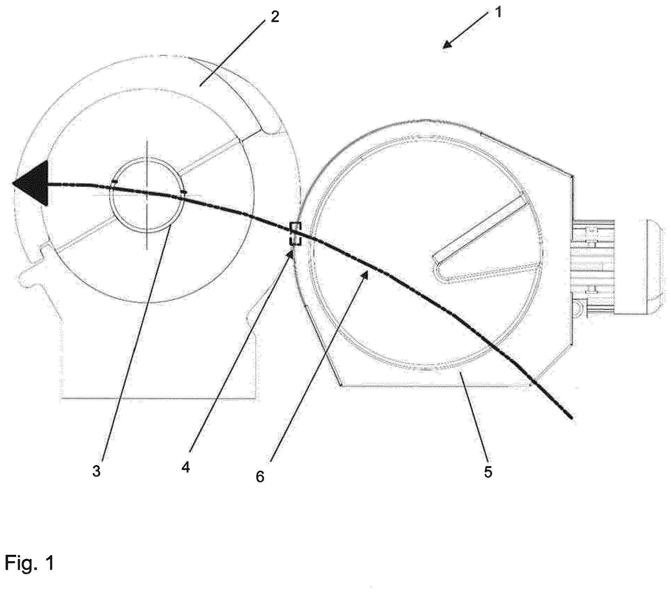

- Fig. 1: eine schematische Darstellung einer erfindungsgemässen Vorrichtung zur Durchführung des erfindungsgemässen Verfahrens.

Fig. 1 zeigt eine schematische Darstellung der erfindungsgemässen Vorrichtung 1 zur Durchführung des erfindungsgemässen Verfahrens.
In der Spannstelle 2 ist eines der miteinander zu verschweissenden Rohrenden 3 ersichtlich, wobei die andere Spannstelle mit dem eingespannten Rohrende vor der Ansicht liegt und somit nicht sichtbar ist.
In der dargestellten Ausführungsform ist der Sensor 4 am Hobel 5 angeordnet. Durch das gesteuerte Einschwenken des Hobels 5, wodurch eine definierte Schwenkbewegung in Bezug auf Weg und Geschwindigkeit vorliegt, bewegt sich der Sensor 4 konstant einer vorgegebenen Kurve 6 bzw. eines Radius entlang.
Auf der Höhe des Rohrendes 3 nimmt der Sensor 4 wahr, dass sich dort ein Rohr 4 befindet und kann somit durch die Messung der Dauer über die der Sensor 4 das Rohr 2 wahrnimmt und die Geschwindigkeit der Schwenkbewegung und den vorgegebenen Weg ermittelt werden welches Rohr 3 bzw. Rohrdimension sich eingespannt befindet. Dadurch können die benötigten Schweissparameter, die in der Steuerung dimensionsbezogen und werkstoffbezogen hinterlegt wurden, zugewiesen werden.
Alternativ kann der Sensor auch am Heizspiegel angeordnet werden.

### Bezugszeichenliste

- 1: Vorrichtung zum Stumpfschweissen
- 2: Spannstelle
- 3: Rohrende
- 4: Sensor
- 5: Hobel
- 6: Kurve / Radius

## Patentansprüche

1. Verfahren zur Erkennung von in eine Stumpfschweissmaschine eingespannte Kunststoffrohrenden (3), wobei die Kunststoffrohrenden (3) mittels eines Hobels (5) der zwischen die Kunststoffrohrenden (3) bringbar ist gehobelt und anschliessend mittels eines Heizspiegels der zwischen die Kunststoffrohrenden (3) bringbar ist aufgeheizt werden und die Kunststoffrohrenden (3) nach dem Entfernen des Heizspiegels miteinander verschweisst werden, wobei der Hobel (5) und/oder der Heizspiegel mittels einer gesteuerten Bewegung zwischen die Kunststoffrohrenden (3) eingeschwenkt werden, **dadurch gekennzeichnet, dass** mittels mindestens eines am Hobel (5) und/oder am Heizspiegel angeordneten Sensors (4) eine Erkennung bzw. Erfassung der Kunststoffrohrenden (3) während der gesteuerten Einschwenkbewegung des Hobels (5) und/oder Heizspiegels erfolgt.

2. Verfahren nach Anspruch 1, **dadurch gekennzeichnet, dass** die beiden sich gegenüberliegenden Kunststoffrohrenden (3) jeweils mittels eines separaten Sensors (4) erkannt bzw. erfasst werden.

3. Verfahren nach einem der Ansprüche 1 oder 2, **dadurch gekennzeichnet, dass** die Erkennung bzw. Erfassung der Kunststoffrohrenden (3) mittels eines optischen Sensors erfolgt.

4. Verfahren nach einem der Ansprüche 1 oder 2, **dadurch gekennzeichnet, dass** die Erkennung bzw. Erfassung der Kunststoffrohrenden (3) mittels eines Lasers erfolgt.

5. Verfahren nach einem der Ansprüche 1 oder 2, **dadurch gekennzeichnet, dass** die Erkennung bzw. Erfassung der Kunststoffrohrenden (3) mittels eines kapazitiven Sensors erfolgt.

6. Verfahren nach einem der Ansprüche 1 bis 5, **dadurch gekennzeichnet, dass** die Erkennung bzw. Erfassung der Kunststoffrohrenden (3) berührungslos erfolgt.

7. Verfahren nach einem der der Ansprüche 1 bis 6, **dadurch gekennzeichnet, dass** mittels Sensor (4) die Rohrdimension ermittelt wird.

8. Verfahren nach einem der Ansprüche 1 bis 7, **dadurch gekennzeichnet, dass** mittels Sensor (4) der Rohrwerkstoff ermittelt wird.

9. Vorrichtung (1) zum Stumpfschweissen von Kunststoffrohrenden insbesondere gemäss dem Verfahren nach einem der Ansprüche 1 bis 8, enthaltend zwei in koaxialer Lage angeordnete Spannstellen (2), wobei die Spannstellen (2) die Kunststoffrohrenden (3) halten, einen Hobel (5), wobei der Hobel (5) zwischen die Kunststoffrohrenden (3) bringbar ist um die Kunststoffrohrenden (3) zu hobeln und einen Heizspiegel zum anschliessenden Aufheizen der Kunststoffrohrenden (3), wobei der Heizspiegel zwischen die Kunststoffrohrenden (3) bringbar ist und die Kunststoffrohrenden (3) nach dem Entfernen des Heizspiegels durch das Zusammenfahren der Spannstellen (2) miteinander verschweisst werden, wobei der Hobel (5) und/oder der Heizspiegel mittels einer gesteuerten Bewegung zwischen die Kunststoffrohrenden (3) eingeschwenkt werden, **dadurch gekennzeichnet, dass** am Hobel (5) und/oder am Heizspiegel mindestens ein Sensor (4) zur Erkennung bzw. Erfassung der Kunststoffrohrenden (4) während der gesteuerten Einschwenkbewegung des Hobels (5) und/oder Heizspiegels angeordnet ist.

10. Vorrichtung (1) nach Anspruch 9, **dadurch gekennzeichnet, dass** die Bewegungsabläufe vorzugsweise alle gesteuert ablaufen bzw. durch eine Steuerung der Vorrichtung (1) geregelt sind.

## Claims

1. A method for detecting plastic pipe ends clamped in a butt welding machine (3), wherein the plastic pipe ends (3) are planed by means of a plane (5), which can be brought between the plastic pipe ends (3), and subsequently heated by means of a heating mirror, which can be brought between the plastic pipe ends (3), and the plastic pipe ends (3) are welded to one another after the removal of the heating mirror, wherein the plane (5) and/or the heating mirror are swivelled in between the plastic pipe ends (3) by means of a controlled movement, **characterised in that** by means of at least one sensor (4) arranged on the plane (5) and/or on the heating mirror a detection or sensing of the plastic pipe ends (3) occurs during the controlled swivelling-in movement of the plane (5) and/or heating mirror.

2. The method according to claim 1, **characterised in that** the two opposing plastic pipe ends (3) are detected or sensed in each case by means of a separate sensor (4).

3. The method according to one of claims 1 or 2, **characterised in that** the detection or sensing of the plastic pipe ends (3) occurs by means of an optical sensor.

4. The method according to one of claims 1 or 2, **characterised in that** the detection or sensing of the plastic pipe ends (3) occurs by means of a laser.

5. The method according to one of claims 1 or 2, **characterised in that** the detection or sensing of the plastic pipe ends (3) occurs by means of a capacitive sensor.

6. The method according to one of claims 1 to 5, **characterised in that** the detection or sensing of the plastic pipe ends (3) occurs in a contactless manner.

7. The method according to one of claims 1 to 6, **characterised in that** the pipe dimension is determined by means of the sensor (4).

8. The method according to one of claims 1 to 7, **characterised in that** the pipe material is determined by means of the sensor (4).

9. A device (1) for the butt welding of plastic pipe ends, in particular according to the method according to one of claims 1 to 8, containing two clamping points (2) arranged in a coaxial position, wherein the clamping points (2) hold the plastic pipe ends (3), a plane (5), wherein the plane (5) can be brought between the plastic pipe ends (3) in order to plane the plastic pipe ends (3), and a heating mirror for subsequently heating the plastic pipe ends (3), wherein the heating mirror can be brought between the plastic pipe ends (3), and the plastic pipe ends (3), after the removal of the heating mirror, can be welded to one another by moving the clamping points (2) together, wherein the plane (5) and/or the heating mirror are swivelled in between the plastic pipe ends (3) by means of a controlled movement, **characterised in that** at least one sensor (4) is arranged on the plane (5) and/or on the heating mirror for detecting or sensing the plastic pipe ends (4) during the controlled swivelling-in movement of the plane (5) and/or heating mirror.

10. The device (1) according to claim 9, **characterised in that** the movement sequences preferably all take place in a controlled manner or are regulated by a controller of the device (1).

## Revendications

1. Procédé de reconnaissance d'extrémités de tuyau en plastique (3) mises en place dans une machine de soudage bout à bout, les extrémités de tuyau en plastique (3) étant rabotés au moyen d'un rabot (5) qui peut être disposé entre les extrémités de tuyau en plastique (3) et ensuite chauffés au moyen d'un miroir chauffant qui peut être disposé entre les extrémités de tuyau en plastique (3) et les extrémités de tuyau en plastique (3) étant soudées ensemble après que le miroir chauffant a été ôté, le rabot (5) et/ou le miroir chauffant étant pivoté(s) entre les extrémités de tuyau en plastique (3) au moyen d'un mouvement commandé, **caractérisé en ce qu'**au moyen d'au moins un capteur (4) disposé sur le rabot (5) et/ou sur le miroir chauffant s'effectue une reconnaissance ou une détection des extrémités de tuyau en plastique (3) pendant le mouvement de pivotement commandé du rabot (5) et/ou du miroir chauffant.

2. Procédé selon la revendication 1, **caractérisé en ce que** les deux extrémités de tuyau en plastique (3) se faisant face sont reconnus ou détectés respectivement au moyen d'un capteur séparé (4).

3. Procédé selon une des revendications 1 ou 2, **caractérisé en ce que** la reconnaissance ou la détection des extrémités de tuyau en plastique (3) s'effectue au moyen d'un capteur optique.

4. Procédé selon une des revendications 1 ou 2, **caractérisé en ce que** la reconnaissance ou la détection des extrémités de tuyau en plastique (3) s'effectue au moyen d'un laser.

5. Procédé selon une des revendications 1 ou 2, **caractérisé en ce que** la reconnaissance ou la détection des extrémités de tuyau en plastique (3) s'effectue au moyen d'un capteur capacitif.

6. Procédé selon une des revendications 1 à 5, **caractérisé en ce que** la reconnaissance ou la détection des extrémités de tuyau en plastique (3) s'effectue sans contact.

7. Procédé selon une des revendications 1 à 6, **caractérisé en ce que** la dimension du tuyau est déterminée au moyen du capteur (4).

8. Procédé selon l'une des revendications 1 à 7, **caractérisé en ce que** le matériau du tuyau est déterminé au moyen du capteur (4).

9. Dispositif (1) de soudage bout à bout d'extrémités de tuyau en plastique en particulier selon le procédé selon une des revendications 1 à 8, comprenant deux points de serrage (2) disposés dans une position coaxiale, les points de serrage (2) maintenant les extrémités de tuyau en plastique (3), un rabot (5), le rabot (5) pouvant être disposé entre les extrémités de tuyau en plastique (3) pour raboter les extrémités de tuyau en plastique (3) et un miroir chauffant pour le chauffage subséquent des extrémités de tuyau en plastique (3), le miroir chauffant pouvant être disposé entre les extrémités de tuyau en plastique (3) et les extrémités de tuyau en plastique (3) étant soudées ensemble par rapprochement des points de serrage (2) après que le miroir chauffant a été ôté, le rabot (5) et/ou le miroir chauffant étant pivoté(s) entre les extrémités de tuyau en plastique (3) au moyen d'un mouvement commandé, **caractérisé en ce que** sur le rabot (5) et/ou sur le miroir chauffant est disposé au moins un capteur (4) de reconnaissance ou de détection des extrémités de tuyau en plastique (4) pendant le mouvement de pivotement commandé du rabot (5) et/ou du miroir chauffant.

10. Dispositif (1) selon la revendication 9, **caractérisé en ce que** les séquences de mouvement se déroulent toutes de manière commandée ou sont réglées par une commande du dispositif (1).
